# EUROPÄISCHE PATENTSCHRIFT

(11) **EP 2 496 655 B1**
(45) Veröffentlichungstag und Bekanntmachung des Hinweises auf die Patenterteilung: **02.10.2013**
(21) Anmeldenummer: 10771109.5
(22) Anmeldetag: 28.10.2010
(51) Int. Cl.: C09J 133/00, C09J 133/02

(54) **HAFTKLEBSTOFFPOLYMER AUS N-BUTYLACRYLAT, ETHYLACRYLAT, VINYLACETAT UND SÄUREMONOMER**
ADHESIVE POLYMER MADE OF N-BUTYLACRYLATE, ETHYLACRYLATE, VINYLACETATE AND ACID MONOMER
ADHÉSIF POLYMÉRIQUE FABRIQUÉ DE N-BUTYLACRYLATE, ETHYLACRYLATE, VINYLACETATE ET DE MONOMÈRE D'ACIDE

(30) Priorität: 05.11.2009 US 258234 P
(43) Veröffentlichungstag der Anmeldung: 12.09.2012
(73) Patentinhaber: BASF SE, 67056 Ludwigshafen (DE)
(72) Erfinder: GERST, Matthias, 67487 Maikammer (DE); AUCHTER, Gerhard, 67098 Bad Dürkheim (DE); BEYERS, Cornelis, Petrus, 67122 Altrip (DE)
(86) Internationale Anmeldenummer: PCT/EP2010/066298
(87) Internationale Veröffentlichungsnummer: WO 2011/054719

(56) Entgegenhaltungen:
- EP-A1- 2 166 057

## Beschreibung

Die Erfindung betrifft ein Haftklebstoffpolymer, gebildet aus (i) 50 - 95 Gew.-% n-Butylacrylat, (ii) 1 - 20 Gew.% Ethylacrylat, (iii) 1 - 20 Gew.% Vinylacetat, (iv) 0,1 - 5 Gew.% mindestens einer ethylenisch ungesättigten Säure oder eines ethylenisch ungesättigten Säureanhydrids, und (v) 0 bis 30 Gew.% weiteren, von den Monomeren (i) bis (iv) verschiedenen ethylenisch ungesättigten Verbindungen. Die Erfindung betrifft auch eine das Polymer enthaltende Haftklebstoffdispersion sowie damit hergestellte selbstklebende Artikel, insbesondere selbstklebende Etiketten.

Bei Haftklebstoffen ist sowohl eine gute Haftung (Adhäsion) zum Substrat gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im Allgemeinen gleichzeitig zu einer Verschlechterung der Kohäsion und umgekehrt.

Haftklebstoffe auf Basis von wässrigen Polymerdispersionen, welche durch Emulsionspolymerisation erhältlich sind, sind lange bekannt. Insbesondere handelt es sich dabei um Polyacrylate. Es handelt sich dabei in der Regel um Copolymere, bei denen mindestens eines der Monomere ein Acrylsäureester ist, welcher Polymere mit relativ niedriger Glasübergangstemperatur bildet, beispielesweise n-Butylacrylat. Bekannte Acrylatcopolymere auf Basis von n-Butylacrylat haben zwar bei Raumtemperatur ausreichende adhäsive Eigenschaften zur Herstellung von selbstklebenden Etiketten. Aufgrund der Temperaturabhängigkeit der Oberflächenklebrigkeit nimmt aber die Oberflächenklebrigkeit bei niedrigeren Temperaturen deutlich ab. Es werden daher Haftklebstoffpolymere gewünscht, welche auch bei Temperaturen deutlich unterhalb von Raumtemperatur noch eine gute Oberflächenklebrigkeit aufweisen, insbesondere gegenüber hydrophoben Oberflächen wie z.B. Polyethylen.

In der WO 2006/082209 werden Klebstoffpolymere beschrieben, bei denen Butylacrylat ein Hauptmonomer ist und Vinylacetat ausgeschlossen ist. In der EP 625557 A1 werden Dispersionshaftklebstoffe beschrieben. Beispiel D zeigt, dass eine Copolymerisation mit Vinylacetat zu verringerten Klebeeigenschaften führt. In der EP 952199 werden Haftklebstoffe beschrieben, welche aufgebaut sind aus u.a. Butylacrylat, copolymerisiert mit Ethylacrylat (Beispiele 7 und 11). In der WO 00/36039 werden Etikettenklebstoffe beschrieben. Vergleichsbeispiele 1-4 sind hergestellt aus u.a. Butylacrylat und Vinylacetat. Copolymere aus Butylacrylat und Vinylacetat sind auch bekannt aus der DE 2008011 (Tabelle 1). In der US 4316830 werden Haftklebstoffdispersionen beschrieben. Die Klebstoffpolymere können z.B. gebildet sein entweder aus n-Butylacrylat, Vinylacetat und Acrylsäure (Beispiel 4) oder aus n-Butylacrylat, Ethylacrylat und Acrylsäure (Beispiel 5).

Aufgabe der vorliegenden Erfindung war es, einen Haftklebstoff zur Verfügung zu stellen, insbesondere für die Verwendung zur Herstellung von Etiketten mit verbesserter Oberflächenklebrigkeit bei niedrigen Temperaturen gegenüber unpolaren Oberflächen.

Demgemäß wurden die nachfolgend näher erläuterten Haftklebstoffpolymere und die durch deren Verwendung erhältlichen selbstklebenden Artikel gefunden. Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Gegenstand der Erfindung ist ein Haftklebstoffpolymer, gebildet aus
(i) 50 - 95 Gew.-% n-Butylacrylat,
(ii) 1 - 20 Gew.% Ethylacrylat,
(iii) 1 - 20 Gew.% Vinylacetat,
(iv) 0,1 - 5 Gew.% mindestens einer ethylenisch ungesättigten Säure oder eines ethylenisch ungesättigten Säureanhydrids, und
(v) 0 bis 30 Gew.% weiteren, von den Monomeren (i) bis (iv) verschiedenen ethylenisch ungesättigten Verbindungen.

Die Gew.-%-Angaben beziehen sich jeweils auf die Summe aller bei der Polymerisation eingesetzten Monomere.

Hauptmonomer ist n-Butylacrylat, welches in einer Menge von 50 - 95 Gew.-%, vorzugsweise von 60 - 90 Gew.% oder von 70 - 90 Gew.-% eingesetzt wird. Ethylacrylat wird in einer Menge von 1 - 20 Gew.%, vorzugsweise von 2 - 10 Gew.% eingesetzt. Das Gewichtsmengenverhältnis von n-Butylacrylat zu Ethylacrylat ist vorzugsweise von 2:1 bis 30:1, insbesondere von 5:1 bis 20:1. Vinylacetat wird in einer Menge von 1 - 20 Gew.%, vorzugsweise von 2 - 10 Gew.% eingesetzt. Das Gewichtsmengenverhältnis von n-Butylacrylat zu Vinylacetat ist vorzugsweise von 2:1 bis 30:1, insbesondere von 5:1 bis 20:1.

Ethylenisch ungesättigte Säuren oder ethylenisch ungesättigte Säureanhydride (Säuremonomere) werden in einer Menge von 0,1 - 5 Gew.-%, vorzugsweise von 0,2 - 3 Gew.% eingesetzt. Geeignet sind beispielsweise Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Die Säuregruppen können in Form ihrer Salze vorliegen. Besonders bevorzugt sind Acrylsäure und Methacrylsäure.

Das Klebstoffpolymer kann aus weiteren Monomeren aufgebaut sein. Die weiteren, von den Monomeren (i) bis (iv) verschiedenen Monomere (v) sind copolymerisierbare, ethylenisch ungesättigte Verbindungen. Sie können in Mengen von 0 bis 30 Gew.%, vorzugsweise von 1 - 20 Gew.% eingesetzt werden. Die weiteren Monomere (v) sind vorzugsweise ausgewählt aus der Gruppe bestehend aus von n-Butylacrylat und Ethylacrylat verschiedenen C₁-C₂₀-Alkyl(meth)acrylaten, von Vinylacetat verschiedenen Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen, Hydroxylgruppen enthaltende Monomere, insbesondere C₁-C₁₀-Hydroxyalkyl(meth)acrylate, (Meth)acrylamid oder Mischungen dieser Monomere. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. C₁-C₂₀-Alkyl(meth)acrylate weisen 1-20 C-Atome in den Alkylgruppen auf. C₁-C₁₀-Hydroxyalkyl(meth)acrylate weisen 1-10 C-Atome in den Hydroxyalkylgruppen auf. Als weitere Monomere seien auch vernetzende Monomere genannt.

Geeignete Monomere sind z.B. (Meth)acrylsäurealkylester mit einem C₁-C₁₀-Alkylrest, wie Methylmethacrylat, Methylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat und Versaticsäurevinylester. Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als weitere Monomere (v) bevorzugt sind C₁- bis C₁₀-Alkylacrylate und C₁- bis C₁₀-Alkylmethacrylate, insbesondere C₁- bis C₈-Alkylacrylate und -methacrylate und Vinylaromaten, insbesondere Styrol und deren Mischungen sowie C2 bis C10 Hydroxyalkyl(meth)acrylate. Ganz besonders bevorzugt sind Methylacrylat, Methylmethacrylat, n-Hexylacrylat, Octylacrylat und 2-Ethylhexylacrylat, Styrol und Hydroxypropylacrylat sowie Mischungen dieser Monomere.

Die weiteren Monomere werden im Allgemeinen in untergeordneten Mengen eingesetzt, ihr Anteil liegt insgesamt vorzugsweise unter 20 Gew. %, insbesondere unter 10 Gew. %.

In einer Ausführungsform ist das Haftklebstoffpolymer gebildet aus
(i) 70 - 90 Gew.-% n-Butylacrylat,
(ii) 2 - 10 Gew.% Ethylacrylat,
(iii) 2 - 10 Gew.% Vinylacetat,
(iv) 0,2 - 3 Gew.% mindestens einer ethylenisch ungesättigten Säure oder eines ethylenisch ungesättigten Säureanhydrids, und
(v) 1 bis 20 Gew.% anderer, von den Monomeren (i) bis (iv) verschiedener ethylenisch ungesättigter Verbindungen.

In einer Ausführungsform ist das Haftklebstoffpolymer gebildet aus
(i) 70 - 90 Gew.-% n-Butylacrylat,
(ii) 2 - 10 Gew.% Ethylacrylat,
(iii) 2 - 10 Gew. % Vinylacetat,
(iv) 0,2 - 3 Gew.% mindestens einer ethylenisch ungesättigten Säure, ausgewählt aus Acrylsäure und Methacrylsäure, und
(v) Styrol und Hydroxypropylacrylat in einer Menge von zusammen 1 - 20 Gew.%.

Die erfindungsgemäßen Klebstoffpolymere sind durch radikalische Polymerisation von ethylenisch ungesättigten Verbindungen (Monomeren) erhältlich. Die Herstellung der Polymere erfolgt vorzugsweise durch Emulsionspolymerisation, es handelt sich daher vorzugsweise um Emulsionspolymerisate. Gegenstand der Erfindung sind deshalb auch Haftklebstoffdispersionen, enthaltend ein in Wasser dispergiertes, durch Emulsionspolymerisation hergestelltes erfindungsgemäßes Haftklebstoffpolymer.

Bei der Emulsionspolymerisation werden ethylenisch ungesättigte Verbindungen (Monomere) in Wasser polymerisiert, wobei ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Trialkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel 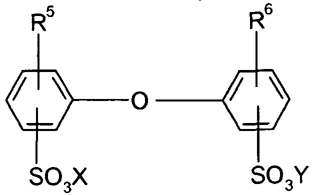 worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax^{®}2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten® I-RA, Lumiten^{®} E 3065, Disponil^{®} FES 77, Lutensol^{®} AT 18, Steinapol^{®} VSL, Emulphor^{®} NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Bei der Polymerisation können Molekulargewichtsregler eingesetzt werden, z.B. in Mengen von 0,1 bis 0,8 Gew.-Teile, bezogen auf 100 Gew.-Teile der zu polymerisierenden Monomeren. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengenerationlen kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Besonders bevorzugt liegt die mittlere Teilchengröße zwischen 140 und 200 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt. Die Glasübergangstemperatur des Haftklebstoffpolymers ist vorzugsweise kleiner 0°C, besonders bevorzugt -60 bis -10°C und ganz besonders bevorzugt -60 bis -20°C. Die Glasübergangstemperatur lässt sich nach üblichen Methoden wie Differentialthermoanalyse oder Differential Scanning Calorimetrie (s. z.B. ASTM 3418/82, sog. "midpoint temperature") bestimmen.

Ein erfindungsgemäßer Haftklebstoff enthält die Haftklebstoffpolymere vorzugsweise in Form der wässrigen Polymerdispersion, wie sie durch die Emulsionspolymerisation erhalten wurde oder erhältlich ist. Die Haftklebstoffe können allein aus den Polymeren bzw. der wässrigen Dispersion der Polymeren bestehen. Der Haftklebstoff kann jedoch auch noch weitere Zusatzstoffe enthalten, z.B. Füllstoffe, Farbstoffe, Verlaufsmittel, Verdicker, vorzugsweise Assoziatiwerdicker, Entschäumer, Weichmacher, Pigmente, Netzmittel oder Tackifier (klebrigmachende Harze). Tackifier sind z. B. aus Adhesive Age, Juli 1987, Seite 19-23 oder Polym. Mater. Sci. Eng. 61 (1989), Seite 588-592 bekannt. Für eine bessere Benetzung von Oberflächen können die Haftklebstoffe insbesondere Benetzungshilfsmittel, z. B. Fettalkoholethoxylate, Alkylphenolethoxylate, Nonylphenolethoxylate, Polyoxyethylene/-propylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Das erfindungsgemäße Haftklebstoffpolymer bzw. die erfindungsgemäße Haftklebstoffdispersion können zur Herstellung von selbstklebenden Artikeln verwendet werden. Die Artikel sind zumindest teilweise mit dem Haftklebstoff beschichtet. Vorzugsweise sind die selbstklebenden Artikel nach der Verklebung wiederabziehbar. Bei den selbstklebenden Artikeln kann es sich z.B. um Folien, Bänder oder Etiketten handeln. Geeignete Trägermaterialien sind z.B. Papier, Kunststofffolien und Metallfolien. Bei erfindungsgemäßen selbstklebenden Bändern kann es sich um einseitig oder beidseitig beschichtete Bänder aus den obigen Substanzen handeln. Besonders bevorzugt sind selbstklebende Etiketten. Bei erfindungsgemäßen selbstklebenden Etiketten kann es sich um Etiketten aus Papier oder einer thermoplastischen Folie handeln. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien. Besonders bevorzugte selbstklebende Artikel sind Papieretiketten.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Die Auftragsmenge beträgt bevorzugt 0,1 bis 30 g, besonders bevorzugt 2 bis 20 g Feststoff pro m². Nach dem Auftragen folgt im Allgemeinen ein Trocknungsschritt zur Entfernung des Wasser bzw. der Lösungsmittel. Das Wasser kann durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Kraftfahrzeugkarosserien oder Karosserieteilen.

Eine Ausführungsform der Erfindung ist ein selbstklebendes Papieretikett. Das Trägermaterial ist Papier und weist eine erste Oberfläche und eine zweite Oberfläche auf, wobei die erste Oberfläche selbstklebend ist und zumindest teilweise mit einem erfindungsgemäßen Haftklebstoff beschichtet ist und wobei die zweite Oberfläche bedruckt sein kann oder die zweite Oberfläche oder das Etikett zumindest teilweise gefärbt sein kann. Die Färbung kann z.B. durch eine farbige Beschichtung mit Pigmenten oder Farbstoffen, durch farbiges Bedrucken oder in Thermopapieren durch Wärmeeinwirkung erzeugt worden sein.

Die erfindungsgemäßen selbstklebenden Artikel haben sehr gute Klebeeigenschaften, insbesondere eine gute Oberflächenklebrigkeit zu unpolaren Oberflächen wie z.B. Polyethylen bei niedrigen Temperaturen (z.B. 5°C).

### Beispiele

Es werden folgende Abkürzungen verwendet:
BA: n-Butylacrylat
VAc: Vinylacetat
EA: Ethylacrylat
EHA: 2-Ethylhexylacrylat
S: Styrol
HPA: Hydroxypropylacrylat
AS: Acrylsäure

Es werden Emulsionspolymerisate eingesetzt, hergestellt aus den in Tabelle 1 genannten Monomeren. Die Mengenangaben sind Gewichtsteile. Die Beispiele V1 und V2 sind Vergleichsbeispiele.

**Tabelle 1**

| Beispiel | BA | VAc | EA | EHA | S | HPA | AS |
|---|---|---|---|---|---|---|---|
| V1 | 85,25 | 10 | 0 | 0 | 2 | 2 | 0,75 |
| V2 | 85,25 | 0 | 10 | 0 | 2 | 2 | 0,75 |
| E1 | 85,25 | 5 | 5 | 0 | 2 | 2 | 0,75 |
| E2 | 75,25 | 5 | 5 | 10 | 2 | 2 | 0,75 |
| E3 | 75,25 | 7 | 7 | 10 | 0 | 0 | 0,75 |
| E4 | 65,25 | 5 | 5 | 20 | 2 | 2 | 0,75 |
| E5 | 55,25 | 5 | 5 | 30 | 2 | 2 | 0,75 |

### Anwendungstechnische Prüfung

Die Haftklebstoffe wurden mit einer Auftragsmenge von 18 g/m² auf Etikettenpapier (Herma, 75 g/m², ungeprimert) als Träger beschichtet (im Transferverfahren, Beschichtung zunächst von Silikonpapier und Transfer auf Papier) und 3 Minuten bei 90 °C getrocknet. Anschließend wurden die Schälfestigkeit (Adhäsion), die Scherfestigkeit (Kohäsion) und der Quickstick bei 23°C bestimmt. Außerdem wurde der Quickstick bei +5°C auf Polyethylen bestimmt.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 25x25 mm auf Stahl geklebt, mit einer 1 kg schweren Rolle 1 mal angerollt, 10 min gelagert (im Normklima, 50 % rel. Luftfeuchtigkeit 1 bar, 23 °C) und anschließend hängend mit einem 1 kg Gewicht belastet (im Normklima). Das Maß für die Scherfestigkeit war die Zeit in Stunden bis zum Abfallen des Gewichts; es wurde jeweils der Durchschnitt aus 5 Messungen berechnet.

Bei der Bestimmung der Schälfestigkeit (Adhäsion) wurde jeweils ein 25 mm breiter Prüfstreifen auf einen Prüfkörper aus Stahl bzw. aus Polyethylen geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfkörper abgezogen und der dazu benötigte Kraftaufwand gemessen. Das Maß für die Schälfestigkeit war die Kraft in N/25 mm, die sich als Durchschnittswert aus fünf Messungen ergab. Die Schälfestigkeit wurde 24 Stunden nach der Verklebung bestimmt. Nach dieser Zeit hat sich die Klebekraft voll ausgebildet. Die Testmethoden entsprechen im Wesentlichen den Finat-Testmethoden (FTM) Nr. 1 und Nr. 8. Die Ergebnisse sind in Tabelle 2 dargestellt.

Bei der Bestimmung des Quickstick (Oberflächenklebrigkeit) wird die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat entgegensetzt. Trägermaterial ist Etikettenpapier 75 g/m², Substrat ist Polyethylen oder Stahl. Aus dem mit Klebstoff beschichteten Träger wird ein Prüfstreifen in 25 mm Breite und 250 mm Länge geschnitten und 16 Stunden bei Normklima (23°C, 50% rel. Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt und das Prüfsubstrat eingelegt. Die Klebestreifenschlaufe wird durch die Zugprüfmaschine mit einer Geschwindigkeit von 300 mm/ Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige als Maß der Oberflächenklebrigkeit abgelesen. Aus mindestens 3 Einzelergebnissen wird ein Mittelwert gebildet. Die Ergebnisse sind in Tabelle 3 dargestellt.

**Tabelle 2: Testergebnisse Schälfestigkeit und Scherfestigkeit**

| Beispiel | Schälfestigkeit auf Stahl [N/25 mm] | Schälfestigkeit auf PE [N/25 mm] | Scherfestigkeit auf Stahl [h] |
|---|---|---|---|
| V1 | 24,5 | 25,0 | 2,0 |
| V2 | 22,1 | 23,2 | 2,5 |
| E1 | 27,6 | 27,3 | 2,8 |
| E2 | 25,5 | 27,4 | 3,2 |
| E3 | 19,3 | 21,6 | 6,3 |
| E4 | 20,1 | 21,1 | 5,1 |
| E5 | 23,8 | 22,1 | 3,1 |

**Tabelle 3: Testergebnisse Quickstick**

| Beispiel | Quickstick auf Stahl 23°C [N/25 mm] | Quickstick auf PE 23°C [N/25 mm] | Quickstick auf PE 5°C [N/25 mm] |
|---|---|---|---|
| V1 | 15,0 | 10,3 | 2,5 |
| V2 | 10,5 | 8,8 | 3,3 |
| E1 | 18,6 | 13,4 | 6,1 |
| E2 | 18,0 | 13,1 | 8,3 |
| E3 | 15,4 | 12,7 | 8,7 |
| E4 | 15,9 | 12,5 | 8,2 |
| E5 | 13,9 | 12,8 | 7,9 |

Die erfindungsgemäßen Beispiele E1 bis E5 zeigen deutlich erhöhte Werte für den Quickstick auf Polyethylen bei 5°C.

## Patentansprüche

1. Haftklebstoffpolymer, gebildet aus
(i) 50 - 95 Gew.-% n-Butylacrylat,
(ii) 1 - 20 Gew.% Ethylacrylat,
(iii) 1 - 20 Gew.% Vinylacetat,
(iv) 0,1 - 5 Gew.% mindestens einer ethylenisch ungesättigten Säure oder eines ethylenisch ungesättigten Säureanhydrids, und
(v) 0 bis 30 Gew.% weiteren, von den Monomeren (i) bis (iv) verschiedenen ethylenisch ungesättigten Verbindungen.

2. Haftklebstoffpolymer nach dem vorhergehenden Anspruch, **dadurch gekennzeichnet, dass** das Gewichtsverhältnis von n-Butylacrylat zu Ethylacrylat von 5:1 bis 20:1 und das Gewichtsverhältnis von n-Butylacrylat zu Vinylacetat von 5:1 bis 20:1 beträgt.

3. Haftklebstoffpolymer nach einem der vorhergehenden Ansprüche, **dadurch gekennzeichnet, dass** das Haftklebstoffpolymer gebildet ist aus
(i) 70 - 90 Gew.-% n-Butylacrylat,
(ii) 2 - 10 Gew.% Ethylacrylat,
(iii) 2 - 10 Gew.% Vinylacetat,
(iv) 0,2 - 3 Gew.% mindestens einer ethylenisch ungesättigten Säure oder eines ethylenisch ungesättigten Säureanhydrids, und
(v) 1 bis 20 Gew.% anderer, von den Monomeren (i) bis (iv) verschiedener ethylenisch ungesättigter Verbindungen.

4. Haftklebstoffpolymer nach einem der vorhergehenden Ansprüche, **dadurch gekennzeichnet, dass** die weiteren ethylenisch ungesättigten Verbindungen (v) ausgewählt sind aus der Gruppe bestehend aus von n-Butylacrylat und von Ethylacrylat verschiedenen C1 bis C20 Alkyl(meth)acrylaten, C1 bis C10 Hydroxyalkyl(meth)-acrylaten, von Vinylacetat verschiedenen Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

5. Haftklebstoffpolymer nach einem der vorhergehenden Ansprüche, **dadurch gekennzeichnet, dass** die weiteren ethylenisch ungesättigten Verbindungen (v) ausgewählt sind aus der Gruppe bestehend aus Styrol, Ethylhexylacrylat und C2 bis C10 Hydroxyalkyl(meth)acrylaten.

6. Haftklebstoffdispersion, enthaltend ein in Wasser dispergiertes, durch Emulsionspolymerisation hergestelltes Haftklebstoffpolymer gemäß einem der vorhergehenden Ansprüche.

7. Selbstklebender Artikel, erhältlich durch Beschichten eines Trägermaterials mit einem Haftklebstoffpolymer gemäß einem der Ansprüche 1 bis 5 oder mit einer Haftklebstoffdispersion gemäß Anspruch 6.

8. Selbstklebender Artikel gemäß dem vorhergehenden Anspruch, **dadurch gekennzeichnet, dass** des sich um ein selbstklebendes Etikett handelt.

9. Selbstklebender Artikel gemäß dem vorhergehenden Anspruch, **dadurch gekennzeichnet, dass** des sich um ein selbstklebendes Papier- oder Folienetikett handelt.

## Claims

1. A pressure-sensitive adhesive polymer formed from
(i) 50% - 95% by weight of n-butyl acrylate,
(ii) 1% - 20% by weight of ethyl acrylate,
(iii) 1% - 20% by weight of vinyl acetate,
(iv) 0.1% - 5% by weight of at least one ethylenically unsaturated acid or ethylenically unsaturated acid anhydride, and
(v) 0% to 30% by weight of other ethylenically unsaturated compounds different from the monomers (i) to (iv).

2. The pressure-sensitive adhesive polymer according to the preceding claim, wherein the weight ratio of n-butyl acrylate to ethyl acrylate is from 5:1 to 20:1 and the weight ratio of n-butyl acrylate to vinyl acetate is from 5:1 to 20:1.

3. The pressure-sensitive adhesive polymer according to either of the preceding claims, wherein the pressure-sensitive adhesive polymer is formed from
(i) 70% - 90% by weight of n-butyl acrylate,
(ii) 2% - 10% by weight of ethyl acrylate,
(iii) 2% - 10% by weight of vinyl acetate,
(iv) 0.2% - 3% by weight of at least one ethylenically unsaturated acid or ethylenically unsaturated acid anhydride, and
(v) 1% to 20% by weight of other ethylenically unsaturated compounds different from the monomers (i) to (iv).

4. The pressure-sensitive adhesive polymer according to any of the preceding claims, wherein the other ethylenically unsaturated compounds (v) are selected from the group consisting of C1 to C20 alkyl (meth)acrylates other than n-butyl acrylate and ethyl acrylate, C1 to C10 hydroxyalkyl (meth)acrylates, vinyl esters of carboxylic acids comprising up to 20 C atoms, other than vinyl acetate, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

5. The pressure-sensitive adhesive polymer according to any of the preceding claims, wherein the other ethylenically unsaturated compounds (v) are selected from the group of styrene, ethylhexyl acrylate, and C2 to C10 hydroxyalkyl (meth)acrylates.

6. A pressure-sensitive adhesive dispersion comprising an aqueously dispersed pressure-sensitive adhesive polymer according to any of the preceding claims, which has been prepared by emulsion polymerization.

7. A self-adhesive article obtainable by coating a carrier material with a pressure-sensitive adhesive polymer according to any of claims 1 to 5 or with a pressure-sensitive adhesive dispersion according to claim 6.

8. The self-adhesive article according to the preceding claim, being a self-adhesive label.

9. The self-adhesive article according to the preceding claim, being a self-adhesive paper label or film label.

## Revendications

1. Polymère autoadhésif, constitué de
(i) 50 - 95 % en poids d'acrylate de n-butyle,
(ii) 1 - 20 % en poids d'acrylate d'éthyle,
(iii) 1 - 20 % en poids d'acétate de vinyle,
(iv) 0,1 - 5 % en poids d'au moins un acide à insaturation éthylénique ou un anhydride d'acide à insaturation éthylénique, et
(v) 0 à 30 % en poids d'autres composés à insaturation éthylénique différents des monomères (i) à (iv).

2. Polymère autoadhésif selon la revendication précédente, **caractérisé en ce que** le rapport pondéral de l'acrylate de n-butyle à l'acrylate d'éthyle vaut de 5:1 à 20:1 et le rapport pondéral de l'acrylate de n-butyle à l'acétate de vinyle vaut de 5:1 à 20:1.

3. Polymère autoadhésif selon l'une quelconque des revendications précédentes, **caractérisé en ce que** le polymère autoadhésif est constitué de
(i) 70 - 90 % en poids d'acrylate de n-butyle,
(ii) 2 - 10 % en poids d'acrylate d'éthyle,
(iii) 2 - 10 % en poids d'acétate de vinyle,
(iv) 0,2 - 3 % en poids d'au moins un acide à insaturation éthylénique ou un anhydride d'acide à insaturation éthylénique, et
(v) 1 à 20 % en poids d'autres composés à insaturation éthylénique différents des monomères (i) à (iv).

4. Polymère autoadhésif selon l'une quelconque des revendications précédentes, **caractérisé en ce que** les autres composés à insaturation éthylénique (v) sont choisis dans le groupe constitué par les (méth)acrylates d'alkyle en C₁-C₂₀ différents de l'acrylate de n-butyle et de l'acrylate d'éthyle, les (méth)acrylates d'hydroxyalkyle en C₁-C₁₀, les esters vinyliques, différents de l'acétate de vinyle, d'acides carboxyliques contenant jusqu'à 20 atomes de carbone, les composés vinylaromatiques ayant jusqu'à 20 atomes de carbone, les nitriles à insaturation éthylénique, les halogénures de vinyle, les éthers vinyliques d'alcools contenant de 1 à 10 atomes de carbone, les hydrocarbures aliphatiques ayant de 2 à 8 atomes de carbone et comportant une ou deux doubles liaisons ou des mélanges de ces monomères.

5. Polymère autoadhésif selon l'une quelconque des revendications précédentes, **caractérisé en ce que** les autres composés à insaturation éthylénique (v) sont choisis dans le groupe constitué par le styrène, l'acrylate d'éthylhexyle et les (méth)acrylates d'hydroxyalkyle en C₂-C₁₀.

6. Dispersion d'adhésif sensible à la pression, contenant un polymère autoadhésif selon l'une quelconque des revendications précédentes, préparé par polymérisation en émulsion.

7. Article autocollant, pouvant être obtenu par enduction d'un matériau de support avec un polymère autoadhésif selon l'une quelconque des revendications 1 à 5 ou avec une dispersion d'adhésif sensible à la pression selon la revendication 6.

8. Article autocollant selon la revendication précédente, **caractérisé en ce qu'**il s'agit d'une étiquette autocollante.

9. Article autoadhésif selon la revendication précédente, **caractérisé en ce qu'**il s'agit d'une étiquette autocollante en film ou papier.
